Europäisches Patentamt

European Patent Office

Office européen des brevets

(11) Veröffentlichungsnummer: **0 364 748**
**A2**

(12) # EUROPÄISCHE PATENTANMELDUNG

(21) Anmeldenummer: **89117349.4**

(51) Int. Cl.⁵: **H04N 7/13**

(22) Anmeldetag: **20.09.89**

(30) Priorität: **18.10.88 DE 3835368**

(43) Veröffentlichungstag der Anmeldung:
**25.04.90 Patentblatt 90/17**

(84) Benannte Vertragsstaaten:
**AT CH DE ES FR GB IT LI SE**

(71) Anmelder: **ROBERT BOSCH GMBH**
**Postfach 10 60 50**
**D-7000 Stuttgart 10(DE)**

(72) Erfinder: **Behrens, Andreas**
**Hermannstrasse 11**
**D-3207 Harsum(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Schaltungsanordnung zum Auslesen von Daten aus einem Bildspeicher.**

(57) Bei einer Schaltungsanordnung zum Auslesen von Daten aus einem Bildspeicher einer DPCM-Schleife, vorzugsweise eines Schmalband-Bildtelefons, unter Berücksichtigung von Bewegungen des Aufnahmegegenstandes, werden Leseadressen durch eine vorzeichenrichtige Addition von Adressen, die bei Abwesenheit von Bewegung zum Auslesen aus dem Bildspeicher dienen (Ursprungsadressen), mit Daten, welche die jeweilige Bewegung kennzeichnen (Bewegungsvektoren), erzeugt.

Fig. 1

EP 0 364 748 A2

## Schaltungsanordnung zum Auslesen von Daten aus einem Bildspeicher

Die Erfindung geht aus von einer Schaltungsanordnung nach der Gattung des Hauptanspruchs.

Zur Übertragung von bewegten Bildern, beispielsweise beim Schmalband-Bildtelefon, sind verschiedene datenreduzierende Codierverfahren bekannt geworden. Eine wesentliche Datenreduzierung wird durch eine DPCM in der Zeitebene erzielt. Durch eine bewegungskompensierte Prädiktion wird eine zusätzliche Verringerung der zu übertragenen Datenmenge erzielt. Dazu werden Signale abgeleitet, welche Bewegungen des Aufnahmegegenstandes beschreiben und mit deren Hilfe ein entsprechend der Bewegung versetztes Auslesen aus dem Bildspeicher der DPCM-Schleife erfolgt.

Zur weiteren Datenreduzierung kann eine diskrete Cosinus-Transformation angewendet werden mit einer blockweisen Codierung der übertragenen Videosignale, wobei ein Block, beispielsweise aus 16 mal 16 Bildelementen besteht. Im Falle der Anwendung der diskreten Cosinus-Transformation kann für jeweils einen Block ein Bewegungssignal gebildet werden, welches der Größe und Richtung der Bewegung dieses Blocks im Verhältnis zu einem vergleichbaren Block des vorangegangenen Bildes im wesentlichen entspricht.

Aufgabe der Erfindung ist es, eine Schaltungsanordnung nach der Gattung des Hauptanspruchs anzugeben, die in möglichst wirtschaftlicher Weise realisiert werden kann.

Die erfindungsgemäße Schaltungsanordnung mit den kennzeichnenden Merkmalen des Hauptanspruchs hat den Vorteil, daß lediglich ein geringer Rechenaufwand zur Ermittlung der Leseadressen erforderlich ist.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild einer Sendeeinrichtung für ein Schmalband-Telefon,

Fig. 2 je eine schematische Darstellung der Adressen eines Bildspeichers im Falle einer fortlaufenden Adressierung und einer Adressierung mit zwei orthogonalen Komponenten der Adressen,

Fig. 3 ein Ausführungsbeispiel mit einem Bildspeicher mit fortlaufender Adressierung,

Fig. 4 ein Ausführungsbeispiel für einen Bildspeicher mit einer Adressierung mit orthogonalen Komponenten und

Fig. 5 eine Darstellung des getrennten Auslesens mehrerer Teilbereiche eines Blocks.

Gleiche Teile sind in den Figuren mit gleichen Bezugszeichen versehen.

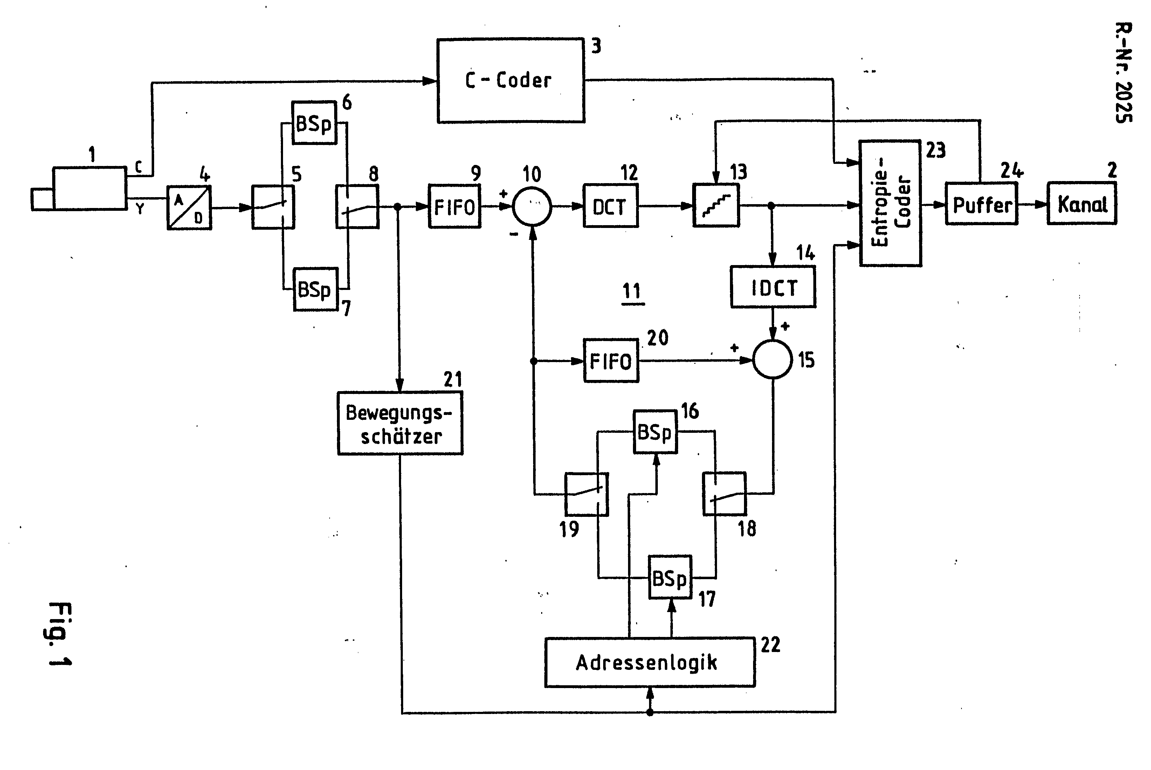

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-Codierung vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und· für die Chrominanz jeweils 8 x 8 Bildelemente große Blökke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

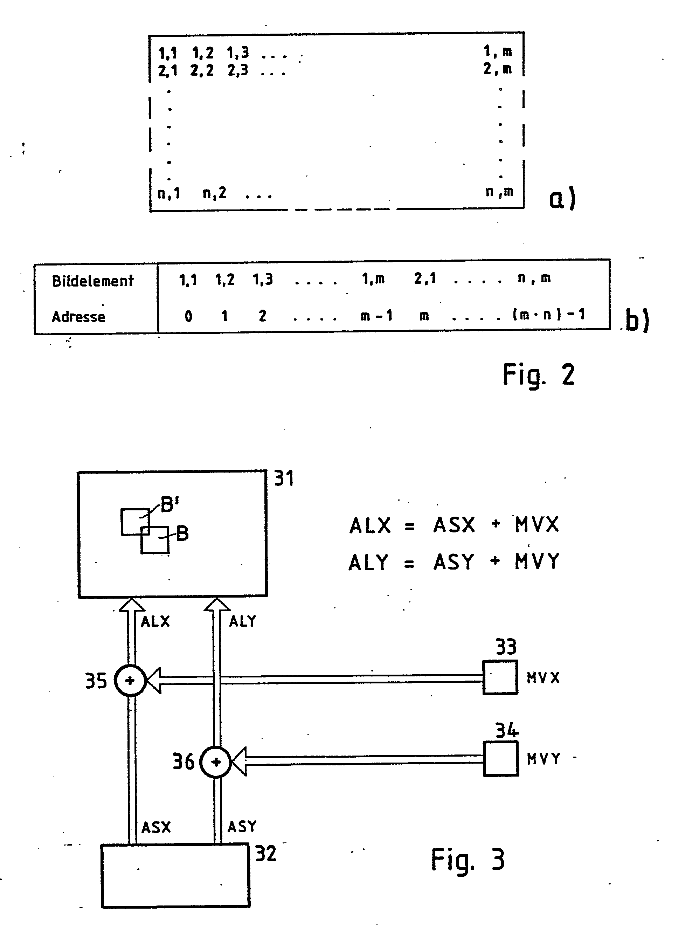

Fig. 2a) zeigt schematisch ein Bild, bei welchem in n Zeilen jeweils m Bildelemente vorhanden sind. Die Lage eines Bildelementes ist durch die jeweiligen Koordinaten, beispielsweise 1,3 oder n,m gekennzeichnet. Ein Einschreiben in einen Speicher bzw. Auslesen aus einem Speicher mit Hilfe von Adressen, welche diesen Koordinaten entsprechen, wird in vielen Anwendungsfällen durchgeführt. Es ist jedoch auch möglich, in einen Speicher die den einzelnen Bildelementen zugeordneten Daten unter fortlaufenden Adressen ohne Rücksicht auf die Zeilenstruktur des Bildes einzuschreiben,

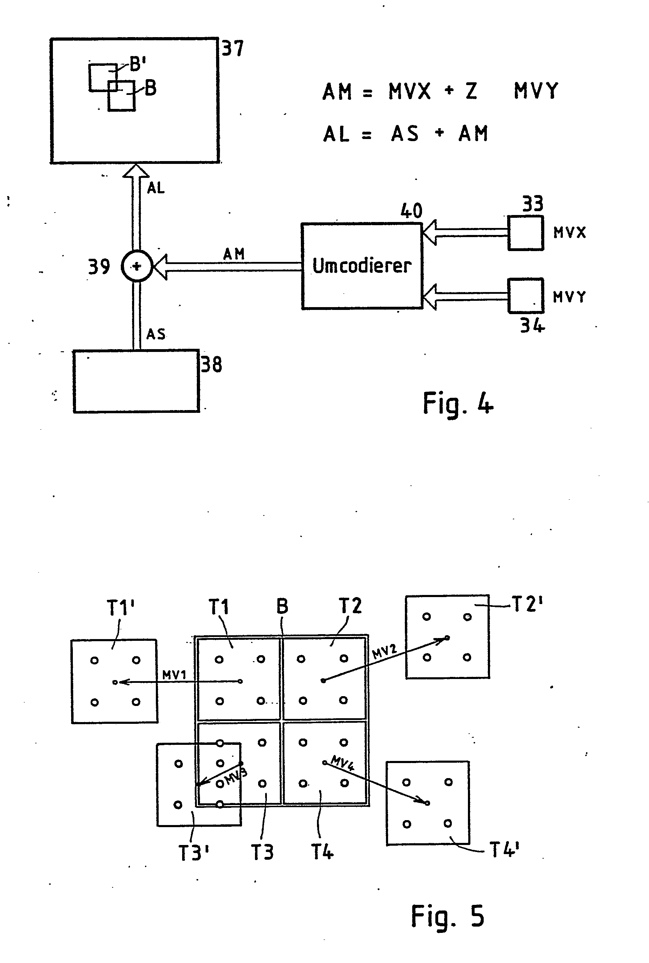

Eine von möglichen Zuordnungen der Koordinaten der Bildelemente mit den Adressen zeigt Fig. 2b). Dabei folgt die Adresse eines am Anfang einer Zeile liegenden Bildelementes der Adresse des letzten Bildelementes der vorangegangenen Zeile. Da die Speicher 16 und 17 (Fig. 1) in gleicher Weise adressiert werden, ist der Übersichtlichkeit halber in den Figuren 3 und 4 lediglich ein Bildspeicher 31 dargestellt, der zeitweise der Bildspeicher 16 oder der Bildspeicher 17 ist. Die übrigen Teile der Blockschaltbilder nach den Figuren 3 und 4 sind Elemente der Adressenlogik 22 (Fig. 1), soweit deren Darstellung zum Verständnis der Erfindung erforderlich ist.

Die zu einem Block B gehörenden Bildelemente sind unter Adressen abgelegt, die im folgenden Ursprungsadressen genannt werden. Zum Auslesen werden von einem Adressengenerator 32 die zu diesen Bildelementen gehörenden Ursprungsadressen nacheinander erzeugt. Dabei bestehen die Ursprungsadressen aus zwei Komponenten ASX und ASY. Wird vom Bewegungsschätzer 21 (Fig. 1) eine Bewegung des Bildinhalts erkannt, durch die der Inhalt des Blocks B im darauffolgenden Bild im Block B′ erscheint, so soll der Block B′ ausgelesen und der Subtrahierschaltung zugeführt werden. Dazu werden vom Bewegungsschätzer 21 zwei Komponenten MVX und MVY eines Bewegungsvektors erzeugt und den Eingängen 33, 34 (Fig. 3) zugeführt. Jede dieser Komponenten wird einer Komponente der Ursprungsadressen ASX, ASY zur Bildung der Leseadressen ALX, ALY entsprechend den in Fig. 3 angegebenen Gleichungen in je einer Addierschaltung 35, 36 hinzuaddiert, wobei das Vorzeichen entsprechend der Bewegungsrichtung berücksichtigt wird.

Bei der Schaltungsanordnung nach Fig. 4 ist ein Bildspeicher 37 vorgesehen, der für eine fortlaufende Adressierung eingerichtet ist. Zur Adressierung jeweils eines Bildelementes wird daher lediglich eine Adresse AS bzw. AL von einem entsprechend eingerichteten Adressengenerator 38 dem Bildspeicher 37 zugeführt. Zum Auslesen eines Blocks B', der entsprechend dem Bewegungsvektor gegenüber dem Block B verschoben ist, wird zu den Ursprungsadressen AS in der Addierschaltung 39 ein Wert AM addiert, der dem Versatz des Blocks B' gegenüber dem Block B entspricht. Dieser Wert wird aus den Komponenten MVX und MVY nach der angegebenen Gleichung in einem Umcodierer 40 ermittelt. Dazu eignet sich in vorteilhafter Weise ein Festwertspeicher, welchem die Komponenten MVX und MVY als Adressen zugeführt werden, unter denen der jeweilige Wert von AM abgelegt ist. Z ist die Zahl der Bildelemente pro Zeile und ist beispielsweise gleich 352.

Am Ausführungsbeispiel nach Fig. 4 wird der Vorteil der erfindungsgemäßen Schaltungsanordnung besonders deutlich. Bei einer neuen Berechnung der jeweiligen Ausleseadresse wären relativ aufwendige Rechnungen, beispielsweise die Multiplikation mit 352 oder einer anderen Zahl von Bildelementen pro Zeile mit anderen relativ vielstelligen Zahlen erforderlich. Bei der erfindungsgemäßen Schaltungsanordnung nach Fig. 4 sind jedoch nur eine Addierschaltung, die ohnehin recht einfach ist, und ein Umcodierer erforderlich. Zur Bildung von AM ist zwar auch eine Multiplikation notwendig, durch den geringen Wertebereich der Bewegungsvektoren bedeutet diese Multiplikation jedoch entweder einen sehr geringen Rechenaufwand oder kann, wie oben erwähnt, mit Hilfe eines Festwertspeichers vorgenommen werden.

Soll ein ganzer Block versetzt ausgelesen werden, wie es in den Figuren 3 und 4 angedeutet ist, so werden alle Adressen mit dem gleichen Bewegungsvektor modifiziert. Es ist jedoch mit der erfindungsgemäßen Schaltungsanordnung auch möglich, Bildelemente eines Blocks unter Anwendung verschiedener Bewegungsvektoren unterschiedlich versetzt aus dem Bildspeicher auszulesen. Dieses wird anhand eines in Fig. 5 dargestellten Beispiels erläutert. Dabei ist der Block B in vier Teilbereiche T1 bis T4 aufgeteilt. Der Block B besteht aus 16 Bildelementen, deren Mittelpunkte in Fig. 5 als Kreise dargestellt sind. Vier Bildelemente bilden jeweils einen der Teilbereiche. Unter Anwendung verschiedener Bewegungsvektoren MV1 bis MV4 werden anstelle der Teilbereiche T1 bis T4 die Teilbereiche T1' bis T4' ausgelesen. Den Eingängen 33, 34 wird in zeitlicher Folge jeweils derjenige der Bewegungsvektoren zugeführt, der die Bewegung des jeweils auszulesenden Bildelementes beschreibt.

**Ansprüche**

1. Schaltungsanordnung zum Auslesen von Daten aus einem Bildspeicher einer DPCM-Schleife, vorzugsweise eines Schmalband-Bildtelefons, unter Berücksichtigung von Bewegungen des Aufnahmegegenstandes, dadurch gekennzeichnet, daß Leseadressen durch eine vorzeichenrichtige Addition von Adressen, die bei Abwesenheit von Bewegung zum Auslesen aus dem Bildspeicher dienen (Ursprungsadressen), mit Daten, welche die jeweilige Bewegung kennzeichnen (Bewegungsvektoren), erzeugt werden.

2. Schaltungsanordnung nach Anspruch 1, wobei in der DPCM-Schleife eine blockweise Codierung erfolgt, dadurch gekennzeichnet, daß die Bewegungsvektoren jeweils für einen Block abgeleitet und zu den Ursprungsadressen derjenigen Bildelemente, die zu dem jeweiligen Block gehören, hinzuaddiert werden.

3. Schaltungsanordnung nach Anspruch 1, wobei in der DPCM-Schleife eine blockweise Codierung erfolgt, dadurch gekennzeichnet, daß Bewegungsvektoren für Teilbereiche jeweils eines Blocks abgeleitet und zu den Ursprungsadressen derjenigen Bildelemente, die zu dem jeweiligen Teilbereich gehören, hinzuaddiert werden.

4. Schaltungsanordnung nach Anspruch 1, dadurch gekennzeichnet, daß eine fortlaufende Adressierung des Bildspeichers vorgesehen ist, daß die Bewegungsvektoren jeweils eine Komponente in Zeilenrichtung (X-Komponente) und senkrecht zur Zeilenrichtung (Y-Komponente) aufweisen und daß vor der Addition eine Umcodierung der Bewegungsvektoren erfolgt.

5. Schaltungsanordnung nach Anspruch 4, dadurch gekennzeichnet, daß für die Umcodierung ein Festwertspeicher, insbesondere ein programmierbarer Nur-Lese-Speicher (PROM) vorgesehen ist.

6. Schaltungsanordnung nach Anspruch 1, dadurch gekennzeichnet, daß für den Bildspeicher eine Adressierung mit zwei orthogonalen Komponenten vorgesehen ist, daß die Bewegungsvektoren jeweils eine Komponente in Zeilenrichtung (X-Komponente) und senkrecht zur Zeilenrichtung (Y-Komponente) aufweisen und daß die Komponenten der Bewegungsvektoren und der Ursprungsadressen getrennt addiert werden.

R.-Nr. 2025

Fig. 1

R.- Nr. 2025

| Bildelement | 1,1 | 1,2 | 1,3 | . . . . | 1,m | 2,1 | . . . . | n , m |
| Adresse | 0 | 1 | 2 | . . . . | m − 1 | m | . . . . | (m · n) − 1 |

b)

Fig. 2

$$ALX = ASX + MVX$$
$$ALY = ASY + MVY$$

Fig. 3

R.-Nr. 2025

$$AM = MVX + Z \quad MVY$$

$$AL = AS + AM$$

37

B'
B

AL

39 ⊕ ←— AM ←— | Umcodierer | 40 ←— 33 | MVX

←— 34 | MVY

AS

38

Fig. 4

T1'    T1    B    T2    T2'

MV1          MV2

MV3    MV4

T3'    T3    T4    T4'

Fig. 5